# EUROPEAN PATENT SPECIFICATION

(11) **EP 0 707 695 B1**
(45) Date of publication and mention of the grant of the patent: **17.06.1998**
(21) Application number: 94920635.3
(22) Date of filing: 05.07.1994
(51) Int. Cl.: F16L 13/11

(54) **GLUE JOINT AND A JOINT PRODUCTION METHOD**
KLEBVERBINDUNG UND VERFAHREN ZU DEREN HERSTELLUNG
JOINT DE COLLAGE ET SON PROCEDE DE PRODUCTION

(30) Priority: 05.07.1993 SE 9302303
(43) Date of publication of application: 24.04.1996
(73) Proprietor: Lear Corporation Sweden Interior Systems AB, 422 46 Hisings Backa (SE)
(72) Inventor: Djurner, Krister, S-522 34 Tidaholm (SE)
(74) Representative: Ferkinghoff, Claes-Göran
(86) International application number: SE9400661
(87) International publication number: WO9502144

(56) References cited:
- EP-A- 0 164 261

## Description

The subject invention concerns a joint formed by gluing together two objects at least one of which comprises a tubular interconnection portion that may be threaded over a portion of the other object.

The traditional manner of joining together objects by means of gluing is to initially apply glue on the relevant surfaces and thereafter to bring the objects into engaging contact. This is a simple and often satisfactory method. Problems arise, however, when the surfaces to be glued are located on a portion of the object that is intended to be threaded over or into another object. In this situation there is a risk that the glue will be shaved off as the objects are being assembled into nesting position, and it is often difficult to obtain a joint having a well defined thickness. Examples of applications when this kind of situation may arise are when tubes in tubular systems are to be interconnected or elements in framework constructions.

When tubes in tubular systems are to be interconnected the gluing method is often adopted when the tubes are made from a material that does not lend itself to welding, such as e.g. reinforced thermosetting plastic. In addition to the time-consuming laminating method, the method used today is based on preparing the tube end in such a manner that one end could be threaded over the other one. Glue is thereafter applied to the contacting surfaces of the ends to be interconnected, whereupon the two ends are joined together. The problems associated with this method is on the one hand that the glue may be scraped off the contacting surfaces during the very interconnection procedure and on the other that the mounting, from the preparatory steps up to the finished joint, is time-consuming. The first problem may result in a leaking joint with ensuing impaired durability. In addition, it is difficult to verify whether the glue joint is intact or not. Furthermore, the method is far from satisfactory from a health point of view since the mounting staff run the risk of being exposed to high concentrations of hazardous substances during work.

In the case of framework constructions the adoption of traditional gluing methods for the interconnection of structural elements could, if made possible, make the mounting more efficient and this is true with respect to both weldable and un-weldable materials.

The subject invention is based on the realisation that a glue joint should be dimensioned so as to ensure that to the highest possible degree the load absorbed be in the form of shearing strain, i.e. that tensile stress, cleavage stress and split stress be minimized. The characteristic features of the joint in accordance with the invention are defined in the appended claims 1 - 3.

The invention also concerns a method of forming a glue joint. The characteristic features of this method are set forth in the appended claims 4 and 5.

The invention will be described in closer detail in the following with reference to the accompanying drawings, wherein
Fig. 1 is a cross-sectional view through two objects chosen to explain the principle of the invention, and
Fig. 2 is a cross-sectional view through a coupling member and a tube section when interconnected.

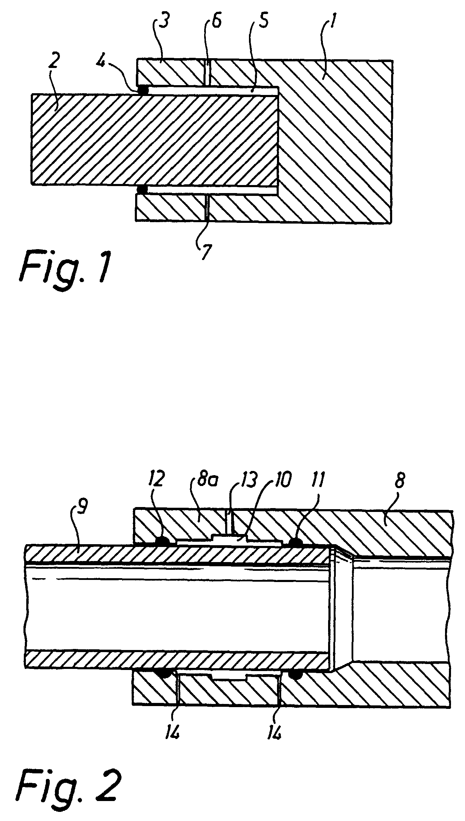

The principle on which the glue joint in accordance with the invention is based is illustrated in Fig. 1, showing two objects 1 and 2 in the interconnected position. Object 1 is formed with a tubular or sleeve-like interconnection portion 3 adapted to be threaded over a part of the other object 2. With the aid of a seal 4, such as an O-ring, a well defined cavity 5 is formed between the tubular interconnection portion 3 of object 1 and the object 2. Via a bore 6 the cavity 5 is in communication with the exterior of the object 1. To the bore 6 may be connected a source of pressurized medium, not shown, and a supply of glue, such as e.g. a glue gun. From said glue supply glue is intended to be injected into the cavity 5 when the two objects 1 and 2 have been moved into nesting relationship. The quality of the glue joint is ensured by the fact that the seal 4 prevents the glue from escaping from its intended location.

On the opposite side from the bore 6, the tubular interconnection portion 3 of the object 1 preferably is provided with at least one additional bore 7, the latter primarily serving as a vent hole to facilitate complete filling-out of the cavity 5 with glue. However, the bore 7 is advantageous also in the respect that it provides an indication that the cavity 5 is completely filled, since in this case glue leaks to the exterior from said bore 7.

Fig. 2 shows an embodiment according to which both objects are tubular components 8 and 9. In this case object 8 could be assumed to be a multi-branch coupling member to the branches of which tubes 9 may be connected at different angles. Like in the embodiment of Fig. 1, the cavity could be the gap forming between two objects 8 and 9 after insertion of an object 9 having a smaller external diameter than the inner diameter of the interconnection portion 8a of the object 8. However, it is likewise possible to form a cavity 10 in the inner wall of the interconnection portion 8a of the object 8 by means of milling or by other methods, said cavity being delimited by means of seals 11, 12 on both sides of the cavity 10.

Like in accordance with the embodiment of Fig. 1 a bore 13 is provided through which glue may be forced into the cavity 10. In accordance with this embodiment two bores 14, one on either side of the cavity 10, are drilled on the opposite side from that of bore 13. These bores 14 serve the same purpose as bore 7 in accordance with Fig. 1.

In order to reduce the force necessary to press the glue about the object 9 and in order to ensure that all air leaves the cavity 10, the latter is preferably formed with a centre depression as appears from Fig. 2, whereby the glue, while successively filling up the cavity 10, will reach the vent holes 14 last. The shape of the cavity 10, the seals 11, 12 and the strategic positon of the vent holes 14 all contribute to ensuring that the cavity 10 is completely filled with glue when the latter penetrates to the exterior through the vent holes 14.

The invention is not limited to the embodiments described and illustrated in the drawings but could be modified in a variety of ways within the scope of the appended claims. This is true as regards the configuration of the cavities 5, 10 as well as the number of bores 6, 13 and 7, 14, respectively. Also the seals 4 and 11, 12 could be of a different nature.

## Claims

1. A joint formed by gluing together two objects (1, 2, 8, 9) at least one (1, 8) of which comprises a tubular interconnection portion (3, 8a) that may be threaded over the other object (2, 9), **characterized** in that a delimited cavity (5, 10) is formed between said other object (2, 9) and the tubular interconnection portion (3, 8a) of the first object (1, 8), and in that a first bore (6, 13) extends from the external face of said tubular interconnection portion (3, 8a) to said cavity, through which first bore (6, 13) glue may be forced into said cavity (5, 10).

2. A joint as claimed in claim 1, **characterized** in that said cavity (5, 10) is delimited by means of stop means, preferably annular seals (4, 11, 12).

3. A joint as claimed in any one of the preceding claims, **characterized** in that a second bore (7, 14) is provided on the tubular interconnection portion (3, 8a) on the opposite side from that of the first bore (6, 13), said second bore serving to allow escape of glue when the cavity (5, 10) is completely filled.

4. A method of forming a joint in accordance with claim 1 by gluing together two objects (1, 2, 8, 9), at least one (1, 8) of which is tubular in the area of the interconnection portion (3, 8a) and is arranged to be threaded onto the other object (2, 9) by means of said portion (3, 8a), **characterized** by closing a gap formed between said tubular interconnection portion (3, 8a) and said other object (2, 9) as said tubular portion is being threaded onto the latter, for the purpose of creating a delimited cavity (5, 10) intermediate the objects (1, 2, 8, 9), and by forcing glue through a first bore (6, 13) formed in the tubular interconnection portion (3, 8a) for the purpose of filling out said cavity (5, 10) with glue.

5. A method as claimed in claim 4, wherein said tubular interconnection portion (3, 8a) is provided on its side opposite to said first bore (6, 13) with at least one second bore (7, 14), **characterized** in that glue is forced through said first bore (6, 13) in a sufficient amount to ensure that glue, once it has filled the cavity (5, 10), penetrates to the exterior through the second bore (7, 14).

## Patentansprüche

1. Verbindung, die durch Zusammenkleben zweier Gegenstände (1, 2, 8, 9), von denen mindestens einer (1, 8) einen röhrenförmigen Verbindungsteil (3, 8a) umfasst, der auf den anderen Gegenstand (2, 9) aufgeschoben werden kann, hergestellt wird, dadurch gekennzeichnet, dass ein begrenzter Hohlraum (5, 10) zwischen dem anderen Gegenstand (2, 9) und dem röhrenförmigen Verbindungsteil (3, 8a) des ersten Gegenstands (1, 8) gebildet wird, und dass eine erste Bohrung (6, 13) von der Aussenfläche des röhrenförmigen Verbindungsteils (3, 8a) zu dem Hohlraum verläuft, wobei durch jene erste Bohrung (6, 13) Klebstoff in den Hohlraum (5, 10) gezwängt werden kann.

2. Verbindung nach Anspruch 1, dadurch gekennzeichnet, dass der Hohlraum (5, 10) durch ein Anschlagsmittel, vorzugsweise ringförmige Dichtungen (4, 11, 12), begrenzt wird.

3. Verbindung nach einem der vorhergehenden Ansprüche, dadurch gekennzeichnet, dass eine zweite Bohrung (7, 14) an dem röhrenförmigen Verbindungsteil (3, 8a) auf der gegenüberliegenden Seite von der der ersten Bohrung (6, 13) vorgesehen ist, wobei die zweite Bohrung dazu dient, ein Entweichen von Klebstoff zu gestatten, wenn der Hohlraum (5, 10) ganz gefüllt ist.

4. Verfahren zur Herstellung einer Verbindung gemäss Anspruch 1 durch Zusammenkleben zweier Gegenstände (1, 2, 8, 9), von denen mindestens einer (1, 8) im Bereich des Verbindungsteils (3, 8a) röhrenförmig und so angeordnet ist, dass er mittels des Teils (3, 8a) auf den anderen Gegenstand (2, 9) aufgeschoben werden kann, gekennzeichnet durch Schliessen eines zwischen dem röhrenförmigen Verbindungsteil (3, 8a) und dem anderen Gegenstand (2, 9) gebildeten Spalts, während der röhrenförmige Teil auf den anderen Gegenstand aufgeschoben wird, mit dem Zweck der Erzeugung eines begrenzten Hohlraums (5, 10) zwischen den Gegenständen (1, 2, 8, 9), und durch Zwängen von Klebstoff durch eine in dem röhrenförmigen Verbindungsteil (3, 8a) ausgebildete erste Bohrung (6, 13), mit dem Zweck des Ausfüllens des Hohlraums (5, 10) mit Klebstoff.

5. Verfahren nach Anspruch 4, bei dem der röhrenförmige Verbindungsteil (3, 8a) auf seiner der ersten Bohrung (6, 13) gegenüberliegenden Seite mit mindestens einer zweiten Bohrung (7, 14) versehen ist, dadurch gekennzeichnet, dass Klebstoff durch die erste Bohrung (6, 13) in einer ausreichenden Menge gezwängt wird, so dass gewährleistet wird, dass Klebstoff, nachdem er den Hohlraum (5, 10) gefüllt hat, durch die zweite Bohrung (7, 14) nach aussen dringt.

## Revendications

1. Joint formé par collage de deux objets (1, 2, 8, 9) l'un à l'autre, au moins un de ces objets (1, 8) comprenant une portion d'interconnexion tubulaire (3, 8a) qui peut être vissée par-dessus l'autre objet (2, 9), caractérisé en ce qu'une cavité délimitée (5, 10) est formée entre ledit autre objet (2, 9) et la portion d'interconnexion tubulaire (3, 8a) du premier objet (1, 8), et en ce qu'un premier alésage (6, 13) s'étend depuis la face externe de ladite portion d'interconnexion tubulaire (3, 8a) en direction de ladite cavité, de la colle pouvant être forcée à travers ledit premier alésage (6, 13) pour pénétrer dans ladite cavité (5, 10).

2. Joint selon la revendication 1, caractérisé en ce que ladite cavité (5, 10) est délimitée à l'aide de moyens d'arrêt, de préférence à l'aide de joints d'étanchéité annulaires (4, 11, 12).

3. Joint selon l'une quelconque des revendications précédentes, caractérisé en ce qu'un second alésage (7, 14) est pratiqué dans la portion d'interconnexion tubulaire (3, 8a) sur le côté opposé de celui dans lequel est pratiqué le premier alésage (6, 13), ledit second alésage permettant à la colle de s'échapper lorsque la cavité (5, 10) est complètement remplie.

4. Procédé de formation d'un joint selon la revendication 1, par collage de deux objets (1, 2, 8, 9) l'un à l'autre, au moins un de ces objets (1, 8) possédant une forme tubulaire dans la zone de la portion d'interconnexion (3, 8a) et étant arrangé pour être vissé sur l'autre objet (2, 9) à l'aide de ladite portion (3, 8a), caractérisé par le fait de fermer un espace libre ménagé entre ladite portion d'interconnexion tubulaire (3, 8a) et ledit autre objet (2, 9) lorsque ladite portion tubulaire est vissée sur ce dernier, dans le but de créer une cavité délimitée (5, 10) entre les objets (1, 2, 8, 9) et par le fait de forcer de la colle à travers un premier alésage (6, 13) pratiqué dans la portion d'interconnexion tubulaire (3, 8a) dans le but de remplir complètement ladite cavité (5, 10) avec de la colle.

5. Procédé selon la revendication 4, dans lequel ladite portion d'interconnexion tubulaire (3, 8a) est munie, sur son côté opposé audit premier alésage (6, 13), d'au moins un second alésage (7, 14), caractérisé en ce que de la colle est forcée à travers ledit premier alésage (6, 13) en une quantité suffisante pour garantir le fait que la colle, après avoir rempli la cavité (5, 10), ressort vers l'extérieur à travers le second alésage (7, 14).
